(19) Europäisches Patentamt
European Patent Office
Office européen des brevets

(11) **EP 4 033 214 A1**

(12) **EUROPÄISCHE PATENTANMELDUNG**

(43) Veröffentlichungstag:
**27.07.2022   Patentblatt 2022/30**

(21) Anmeldenummer: **21204464.8**

(22) Anmeldetag: **25.10.2021**

(51) Internationale Patentklassifikation (IPC):
*G01K 11/24* (2006.01)          *G01F 1/667* (2022.01)
*G01K 15/00* (2006.01)

(52) Gemeinsame Patentklassifikation (CPC):
**G01K 11/24; G01F 1/668; G01K 15/005**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **21.01.2021   DE 102021101256**

(71) Anmelder: **Krohne AG**
**4019 Basel (CH)**

(72) Erfinder: **Hogendoorn, Cornelis Johannes**
**4211 BG Spijk (NL)**

(74) Vertreter: **Gesthuysen Patentanwälte**
**Patentanwälte**
**Huyssenallee 100**
**45128 Essen (DE)**

(54) **VERFAHREN ZUR KALIBRATION EINER AUF ULTRASCHALLMESSUNG BASIERENDEN TEMPERATURMESSEINHEIT, VERFAHREN ZUR MESSUNG DER TEMPERATUR EINES MEDIUMS, TEMPERATURMESSEINHEIT UND ULTRASCHALLDURCHFLUSSMESSGERÄT**

(57)   Beschrieben und dargestellt ist ein Verfahren (1) zur Kalibration einer auf Ultraschallmessung basierenden Temperaturmesseinheit (3), wobei die Temperaturmesseinheit (3) eine Ultraschallmesseinrichtung (10) mit wenigstens einem Ultraschallsender und wenigstens einem Ultraschallempfänger aufweist, wobei ein Temperatursensor (12) vorhanden ist, **dadurch gekennzeichnet,** dass das Verfahren (1) die folgenden Schritte aufweist:
- Herstellung eines empirischen funktionalen Zusammenhangs $T_M(c)$ zwischen der Mediumtemperatur $T_M$ eines zu vermessenden Mediums und der Schallgeschwindigkeit c eines Messsignals, das das zu vermessende Medium durchläuft,

wobei auf wenigstens zwei Messpunkten zumindest die Schallgeschwindigkeit c eines Messsignals, die mittels eines Temperatursensors gemessene Temperatur $T_{sensor}$ und die zeitliche Variation der Sensortemperatur $dT/dt$ bestimmt werden (5), wobei die wenigstens zwei Messpunkte eine unterschiedliche Mediumtemperatur $T_M$ aufweisen, wobei aus der gemessenen Temperatur $T_{sensor}$ unter Berücksichtigung der zeitlichen Variation der Sensortemperatur $dT/dt$ die Mediumtemperatur $T_M$ bestimmt wird (6), sodass wenigstens zwei Wertepaare $(T_{M1}, c_1)$ und $(T_{M2}, c_2)$ existieren, und wobei eine Ausgleichskurve durch die Wertepaare gelegt wird (7), die dem empirischen funktionalen Zusammenhang $T_M(c)$ entspricht,
- Hinterlegung (8) des funktionalen Zusammenhangs $T_M(c)$ in der Temperaturmesseinheit (3).

Fig. 3

**Beschreibung**

Die Erfindung geht aus von einem Verfahren zur Kalibration einer auf Ultraschallmessung basierenden Temperaturmesseinheit, wobei die Temperaturmesseinheit eine Ultraschallmesseinrichtung mit wenigstens einem Ultraschallsender und wenigstens einem Ultraschallempfänger aufweist, wobei ein Temperatursensor vorhanden ist.

Darüber hinaus betrifft die Erfindung ein Verfahren zur Messung der Temperatur eines, vorzugsweise strömenden, Mediums mit einer Temperaturmesseinheit, wobei die Temperaturmesseinheit eine Ultraschallmesseinrichtung mit wenigstens einem Ultraschallsender und wenigstens einem Ultraschallempfänger aufweist.

Zudem betrifft die Erfindung eine Temperaturmesseinheit zur Messung der Temperatur eines Mediums mit wenigstens einer Ultraschallmesseinrichtung, wobei die Ultraschallmesseinrichtung wenigstens einen Ultraschallsender und wenigstens einen Ultraschallempfänger aufweist, und mit einer Steuer- und Auswerteeinheit.

Schließlich betrifft die Erfindung ein Ultraschalldurchflussmessgerät mit einem Messrohr und mit einer Ultraschallmesseinrichtung, wobei die Ultraschallmesseinrichtung wenigstens einen Ultraschallsender und wenigstens einen Ultraschallempfänger aufweist, mit wenigstens einer Temperaturmesseinheit.

Die Messung der Temperatur eines flüssigen Mediums, insbesondere die Messung von Temperaturänderungen erfordert Temperatursensoren, die schnell und zuverlässig messen. Gerade fließende Medien weisen häufig eine sich schnell ändernde Temperatur auf.

Zur Messung von hohen Prozesstemperaturen sind konventionelle Temperatursensoren häufig mit einem zusätzlichen Metallgehäuse verkleidet. Das führt dazu, dass bei Temperaturänderungen das Metallgehäuse langsamer die Temperatur ändert als das Medium, sodass schnelle Temperaturänderungen nicht erfasst werden können. Bei Temperaturänderungen zeigt ein solcher Temperatursensor daher ein träges Verhalten.

Aus dem Stand der Technik ist es bekannt, dass die Schallgeschwindigkeit eines sich durch das zu messende Medium ausbreitenden Messsignals abhängig von der Temperatur des Mediums ist. Für einige Fluide, wie zum Beispiel Wasser ist der Zusammenhang zwischen der Schallgeschwindigkeit und der Temperatur von Wasser bekannt.

In diesem Zusammenhang offenbart die Druckschrift WO 2014/039873 A1 ein Verfahren zur Bestimmung der Temperatur eines fließenden Mediums mittels eines Ultraschallwandlerpaars, wobei ein konventioneller Temperatursensor vorhanden ist und wobei die mittels der Ultraschallwandler gemessene Temperatur zur Korrektur bzw. zur Kontrolle der mittels des konventionellen Temperatursensors gemessenen Temperatur genutzt wird. Dabei geht diese Druckschrift von einem bekannten Zusammenhang zwischen der Schallgeschwindigkeit und der Temperatur des Mediums aus.

Der Zusammenhang zwischen der Mediumtemperatur und der Schallgeschwindigkeit eines sich durch das Medium ausbreitenden Messsignals ist jedoch nicht immer bekannt.

Ausgehend von dem beschriebenen Stand der Technik ist es Aufgabe der Erfindung, ein Verfahren zur Kalibrierung einer auf Ultraschallmessung basierenden Temperaturmesseinheit anzugeben, sodass eine auf Ultraschallmessung basierende Temperaturmessung eine besonders hohe Genauigkeit aufweist.

Zudem ist es Aufgabe der Erfindung, ein Verfahren zur Messung der Temperatur eines Mediums sowie eine Temperaturmesseinheit und ein Ultraschalldurchflussmessgerät anzugeben, das bzw. die eine besonders genaue Temperaturmessung ermöglicht.

Gemäß einer ersten Lehre der vorliegenden Erfindung wird die eingangs dargelegte Aufgabe durch ein eingangs beschriebenes Verfahren dadurch gelöst, dass das Verfahren die folgenden Schritte aufweist:

- Herstellung eines empirischen funktionalen Zusammenhangs $T_M(c)$ zwischen der Mediumtemperatur $T_M$ eines zu vermessenden Mediums und der Schallgeschwindigkeit c eines Messsignals, das das zu vermessende Medium durchläuft,

  wobei auf wenigstens zwei Messpunkten zumindest die Schallgeschwindigkeit c eines Messsignals, die mittels eines Temperatursensors gemessene Temperatur $T_{sensor}$ und die zeitliche Variation der Sensortemperatur dT/dt bestimmt werden, wobei die wenigstens zwei Messpunkte eine unterschiedliche Mediumtemperatur $T_M$ aufweisen,

  wobei aus der gemessenen Temperatur $T_{sensor}$ unter Berücksichtigung der zeitlichen Variation der Sensortemperatur dT/dt die Mediumtemperatur $T_M$ bestimmt wird, sodass wenigstens zwei Wertepaare $(T_{M1}, c_1)$ und $(T_{M2}, c_2)$ existieren,

  und wobei eine Ausgleichskurve durch die Wertepaare gelegt wird, die dem empirischen funktionalen Zusammenhang $T_M(c)$ entspricht,

- Hinterlegung des funktionalen Zusammenhangs $T_M(c)$ in der Temperaturmesseinheit.

Grundsätzlich kann der Temperatursensor Teil der Temperaturmesseinheit sein oder als separates Bauteil in unmittelbarer Nähe der Ultraschallmesseinrichtung angeordnet sein.

Die Erfindung beruht insofern auf der Idee, die Temperaturmesseinheit individuell für das zu vermessende Medium zu kalibrieren, wobei neben der einfachen Messung der Temperatur durch einen Temperatursensor und der entsprechenden Schallgeschwindigkeit auch die Trägheit des Temperatursensors berücksichtigt wird. Da die Bestimmung der Mediumtemperatur $T_M$ unter Berücksichtigung der Trägheit des Temperatursensors erfolgt, weist diese Bestimmung eine besonders hohe Genauigkeit auf, die sich in einer besonders hohen Genauigkeit der Temperaturmessung über die Schallgeschwindigkeit der erfindungsgemäßen Temperaturmesseinheit fortsetzt.

Besonders bevorzugt kann vor der Inbetriebnahme der Temperaturmesseinheit der Zusammenhang zwischen der Schallgeschwindigkeit c und der Temperatur $T_M$ des Mediums durch die erfindungsgemäße Kalibration für eine Mehrzahl an Medien bestimmt und hinterlegt werden.

Im Betrieb der Temperaturmesseinheit kann die Temperatur des Mediums dann über die Messung der Schallgeschwindigkeit c eines Messsignals besonders einfach und schnell bestimmt werden. Insbesondere schnelle Temperaturänderungen können mittels der Messung der Schallgeschwindigkeit c eines Messsignals durch das zu vermessende Medium bestimmt werden.

Gemäß einer ersten vorteilhaften Ausgestaltung liegt an wenigstens zwei Messpunkten die zeitliche Variation der Sensortemperatur dT/dt und/oder die zeitliche Variation der gemessenen Schallgeschwindigkeit dc/dt unter einem festgelegten Grenzwert.

Hierdurch ist sichergestellt, dass der Temperatursensor auf den Messpunkten die Temperatur des zu vermessenden Mediums aufweist. Zudem kann durch eine im Wesentlichen konstante Schallgeschwindigkeit gewährleistet werden, dass das zu vermessende Medium keine Temperaturschwankungen aufweist.

Gemäß einer besonders bevorzugten Ausgestaltung liegt an jedem Messpunkt die zeitliche Variation der Sensortemperatur dT/dt und/oder die zeitliche Variation der gemessenen Schallgeschwindigkeit dc/dt unter einem festgelegten Grenzwert. Diese Ausgestaltung ist insofern besonders einfach, als dass die gemessene Sensortemperatur $T_{sensor}$ unmittelbar der Mediumtemperatur $T_M$ entspricht. Durch die Messung der Sensortemperatur $T_{sensor}$ und der Schallgeschwindigkeit c auf den Messpunkten 1...n erhält man daher unmittelbar die Wertepaare $(T_{M1}, c_1)$ und $(T_{M2}, c_2)$ bis $(T_{Mn}, c_n)$.

Besonders bevorzugt ist es aber auch, wenn bei der Bestimmung der Mediumtemperatur $T_M$ aus der Sensortemperatur $T_{sensor}$ zusätzlich eine die Trägheit des Temperatursensors beschreibende Zeitkonstante $\tau$ berücksichtigt wird.

Die Zeitkonstante $\tau$ ist dabei definiert durch

$$\tau = (m*c)/(h*A),$$

mit

m = Masse des Temperatursensors

c = Wärmekapazität des Temperatursensors

h = Wärmeübergangszahl

A = vom Medium bedeckte Fläche des Temperatursensors.

Bis auf die Wärmeübergangszahl, die, wie nachfolgend dargelegt, abzuschätzen ist, sind sämtliche Parameter konstant.

Gemäß dieser Ausgestaltung können nicht nur die Messpunkte berücksichtigt werden, auf denen die zeitliche Variation der gemessenen Temperatur dT/dt kleiner als der festgelegte Grenzwert ist. Vielmehr lassen sich bei der Bestimmung der Mediumtemperatur $T_M$ aus der gemessenen Sensortemperatur $T_{sensor}$ auch sämtliche Temperaturwerte im Verlauf einer Temperaturänderung des Temperatursensors berücksichtigen. Diese Ausgestaltung weist damit den Vorteil auf, dass die Kalibrierung mit einem besonders geringen Zeitaufwand durchgeführt werden kann.

Gemäß einer weiteren vorteilhaften Ausgestaltung wird zur Bestimmung der Mediumtemperatur $T_M$ unter Berücksichtigung der gemessenen Sensortemperatur $T_{sensor}$ und der zeitlichen Variation dT/dt die Zeitkonstante $\tau$ derart abgeschätzt, dass die wenigstens zwei Wertepaare $(T_{M1}, c_1)$ und $(T_{M2}, c_2)$ auf einer glatten Kurve angeordnet sind. Besonders bevorzugt wird eine Mehrzahl an Messpunkten vermessen, sodass nach der Abschätzung von $\tau$ eine Mehrzahl an Messpunkten $(T_{M1}, c_1)$ bis $(T_{Mn}, c_n)$ vorhanden sind.

Gemäß einer weiteren bevorzugten Ausgestaltung wird die Mediumtemperatur $T_M$ aus der gemessenen Sensortemperatur $T_{sensor}$ und der zeitlichen Variation dT/dt der Sensortemperatur mittels des Zusammenhangs

$T_M = T_{sensor} + \tau * dT/dt$ bestimmt, wobei die Zeitkonstante $\tau$ derart abgeschätzt wird, dass die wenigstens zwei Wertepaare $(T_{M1}, c_1)$ und $(T_{M2}, c_2)$ auf einer glatten Kurve angeordnet sind.

Unter einer glatten Kurve wird insbesondere ein funktionaler Zusammenhang zwischen der Mediumtemperatur $T_M$ und der Schallgeschwindigkeit c verstanden, wobei jedem Wert der Schallgeschwindigkeit c genau ein Wert der Mediumtemperatur $T_M$ zugeordnet werden kann.

Zudem ist es vorteilhaft, wenn an jedem Messpunkt zusätzlich der Druck des Mediums gemessen wird und wenn ein funktionaler Zusammenhang $T_M(c,p)$ zwischen der Mediumtemperatur $T_M$, der Schallgeschwindigkeit c und dem Druck des Mediums p hergestellt wird.

Durch diese Ausgestaltung kann die Genauigkeit der Messung der Temperatur noch erhöht werden.

Gemäß einer zweiten Lehre wird die zuvor beschriebene Aufgabe durch ein eingangs dargelegtes Verfahren zur Messung der Temperatur eines, vorzugsweise strömenden, Mediums mit einer Temperaturmesseinheit dadurch gelöst, dass die Temperaturmesseinheit mit einem der zuvor beschriebenen Verfahren kalibriert ist, dass die Schallgeschwindigkeit c eines das zu vermessende Medium durchlaufenden Messsignals gemessen wird und dass aus dem hinterlegten Zusammenhang $T_M(c)$ die Temperatur des Mediums bestimmt wird.

Ein solches Verfahren weist den Vorteil auf, dass die Temperatur eines Mediums, insbesondere die Temperatur eines fließenden Mediums besonders genau und besonders schnell erfasst werden kann. Weiterhin können sowohl Temperaturverläufe in Echtzeit als auch kurzzeitige Temperaturschwankungen erfasst werden.

Gemäß einer vorteilhaften Ausgestaltung weist die Temperaturmesseinheit einen Temperatursensor auf, wobei im Betrieb die Temperatur des Mediums zumindest zeitweise sowohl über die Schallgeschwindigkeit als auch über den Temperatursensor bestimmt wird und wobei insbesondere in dem Fall, in dem zeitliche Variation der Temperatur dT/dt unter einem festgelegten Grenzwert liegt, die über die Schallgeschwindigkeit bestimmte Temperatur $T_M$ mit der Sensortemperatur $T_{sensor}$ verglichen wird. Diese Ausgestaltung weist den Vorteil auf, dass eine korrekte Bestimmung der Mediumtemperatur im Betrieb dauerhaft überprüft werden kann. Sofern eine Abweichung vorliegt, können insofern frühzeitig entsprechende Maßnahmen zur Korrektur ergriffen werden.

Gemäß einer Ausgestaltung wird die Temperaturmesseinheit automatisch gemäß einem der zuvor beschriebenen Verfahren neu kalibriert und/oder es wird eine Meldung hinsichtlich der gemessenen Abweichung ausgegeben, sofern die über die Schallgeschwindigkeit bestimmte Temperatur $T_M$ in dem Fall, indem dT/dt unter einem bestimmten Grenzwert liegt, von der Sensortemperatur $T_{sensor}$ abweicht. Beispielsweise kann gemäß dieser Ausgestaltung des Verfahrens ein Medienwechsel erkannt werden, wobei sich die Temperaturmesseinheit durch eine Neukalibrierung an das geänderte Medium anpassen kann.

Gemäß einer dritten Lehre wird die eingangs dargelegte Aufgabe durch eine eingangs beschriebene Temperaturmesseinheit dadurch gelöst, dass in der Steuer- und Auswerteeinheit ein gemäß einem der zuvor beschriebenen Verfahren hergestellter Zusammenhang $T_M(c)$ zwischen der Mediumtemperatur $T_M$ des zu vermessenden Mediums und der Schallgeschwindigkeit c eines Messsignals hinterlegt ist,

und dass die Temperaturmesseinheit im Betrieb aus der Messung der Schallgeschwindigkeit c eines Messsignals die aktuelle Temperatur des Mediums $T_M$ gemäß einem der zuvor beschriebenen Verfahren bestimmt.

Eine solche Temperaturmesseinheit weist den Vorteil auf, dass die Temperatur des Mediums einerseits sehr genau und andererseits sehr schnell gemessen werden kann. Insbesondere Temperaturänderungen oder die Temperatur eines fließenden Mediums können besonders genau und schnell erfasst werden.

Gemäß einer vorteilhaften Ausgestaltung weist die Temperaturmesseinheit einen Ultraschallwandler auf, der sowohl als Ultraschallsender als auch als Ultraschallempfänger ausgebildet ist.

In einer besonders einfachen Anordnung ist die Temperaturmesseinheit mit dem Ultraschallwandler, der als Ultraschallsender und als Ultraschallempfänger ausgestaltet ist, beispielsweise an einem Messrohr angeordnet, wobei der Ultraschallwandler derart ausgerichtet ist, dass er als Ultraschallsender ein Messsignal im Wesentlichen senkrecht zur Strömungsrichtung eines das Messrohr durchströmenden Mediums aussendet und dass er als Ultraschallempfänger das Messsignal nach Reflexion an der gegenüberliegenden Messrohrinnenwand empfängt.

Gemäß einer vierten Lehre der vorliegenden Erfindung wird die eingangs dargelegte Aufgabe durch ein eingangs beschriebenes Ultraschalldurchflussmessgerät dadurch gelöst, dass die Temperaturmesseinheit erfindungsgemäß ausgebildet ist, sodass das Ultraschalldurchflussmessgerät im Betrieb einerseits aus der Laufzeit eines ersten Messsignals, das das Medium sowohl in Strömungsrichtung als auch entgegen der Strömungsrichtung durchläuft, die Strömungsgeschwindigkeit des Mediums bestimmt und andererseits durch die Messung der Schallgeschwindigkeit c des ersten Messsignals oder eines zweiten Messsignals die Temperatur des Mediums bestimmt.

Gemäß einer Ausgestaltung sind der wenigstens eine Ultraschallsender und der wenigstens eine Ultraschallempfänger der Temperaturmesseinrichtung identisch mit dem Ultraschallsender und dem Ultraschallempfänger des Ultraschalldurchflussmessgeräts zur Bestimmung des Durchflusses des strömenden Mediums.

Beispielsweise weist das Ultraschalldurchflussmessgerät wenigstens zwei Ultraschallwandler auf, die sowohl als Ultraschallsender als auch als Ultraschallempfänger ausgebildet sind.

Gemäß einer anderen Ausgestaltung weist das Ultraschalldurchflussmessgerät neben der Temperaturmesseinheit wenigstens einen weiteren Ultraschallsender und wenigstens einen weiteren Ultraschallempfänger auf, die die Ultraschallmesseinrichung zur Messung des Durchflusses eines durch das Messrohr strömenden Mediums bilden. Gemäß dieser Ausgestaltung kann insbesondere die Temperaturmesseinrichtung als Ultraschallwandler ausgebildet sein, der sowohl als Ultraschallsender als auch als Ultraschallempfänger arbeitet, wobei der Ultraschallwandler derart an dem Messrohr angeordnet und ausgerichtet ist, dass er als Ultraschallsender ein Messsignal im Wesentlichen senkrecht zur Strömungsrichtung des strömenden Mediums aussendet und das Messsignal nach der Reflexion an der gegenüberliegenen Messrohrinnenwand wieder empfängt.

Da die Zeitkonstante $\tau$ von der Strömungsgeschwindigkeit des fließenden Mediums abhängt, wird gemäß einer Ausgestaltung von der Steuer- und Auswerteeinheit zur Bestimmung der Mediumtemperatur ebenfalls die mittels des Durchflussmessgeräts bestimmte aktuelle Strömungsgeschwindigkeit durch Skalierung von τ berücksichtigt. Eine Bestimmung der Mediumtemperatur gemäß dieser Ausgestaltung ist besonders genau.

Das Ultraschalldurchflussmessgerät kann als Clamp-On Messgerät derart ausgebildet sein, dass der wenigstens eine Ultraschallsender und der wenigstens eine Ultraschallempfänger außen auf das Messrohr aufgesetzt sind. Zudem kann das Ultraschalldurchflussmessgerät auch derart ausgebildet sein, dass der wenigstens eine Ultraschallsender und der wenigstens eine Ultraschallempfänger in die Messrohrwand integriert sind.

Gemäß einer weiteren vorteilhaften Ausgestaltung ist die Temperaturmesseinheit derart an dem Messrohr angeordnet, dass der Ultraschallsender und der Ultraschallempfänger im Wesentlichen plan zu der Messrohrinnenwand angeordnet sind.

Diese Ausgestaltung weist den Vorteil auf, das Änderungen im Medium, beispielsweise Änderungen der Temperatur des Mediums unmittelbar von dem Ultraschallsender und dem Ultraschallempfänger erfasst werden, da keine Totzeiten, die beispielsweise auf rückversetzte Anordnungen zurückzuführen sind, zu berücksichtigen sind. Insbesondere zur Erfassung von kurzzeitigen Schwankungen ist diese Anordnung vorteilhaft.

Es gibt nun eine Vielzahl von Möglichkeiten die erfindungsgemäßen Verfahren, die erfindungsgemäße Temperaturmesseinheit und das erfindungsgemäße Ultraschalldurchflussmessgerät auszugestalten und weiterzubilden. Hierzu wird verwiesen sowohl auf die den unabhängigen Patentansprüchen nachgeordneten Patentansprüche als auch auf die Beschreibung von bevorzugten Ausführungsbeispielen in Verbindung mit der Zeichnung. In der Zeichnung zeigen:

Fig. 1      den Temperaturverlauf einer sich sprunghaft ändernden Mediumstemperatur und die Anpassung der Temperatur eines Temperatursensors,

Fig. 2      ein erstes Ausführungsbeispiel eines erfindungsgemäßen Verfahrens zur Kalibration einer Temperaturmesseinheit,

Fig. 3      den Temperaturverlauf der Temperatur des Mediums $T_M$ sowie der Temperatur eines Sensors $T_{sensor}$ bei Temperaturänderungen,

Fig. 4      den funktionellen Zusammenhang zwischen der Schallgeschwindigkeit c und der Temperatur des Mediums $T_M$,

Fig. 5      den Temperaturverlauf der Mediumstemperatur $T_M$ und der Sensortemperatur $T_{sensor}$ bei sprunghaften und kontinuierlichen Temperaturänderungen des Mediums sowie die gleichzeitig erfasste Schallgeschwindigkeit c,

Fig. 6      ein zweites Ausführungsbeispiel eines Verfahrens zur Kalibrierung einer Temperaturmesseinheit,

Fig. 7a bis 7c      den Zusammenhang zwischen der Schallgeschwindigkeit c und der berechneten Mediumstemperatur $T_M$ bei unterschiedlichen Schätzungen der Zeitkonstanten τ,

Fig. 8      ein Ausführungsbeispiel einer Temperaturmesseinheit und eines Ultraschalldurchflussmessgeräts und

Fig. 9      ein Verfahren zur Messung der Temperatur eines strömenden Mediums.

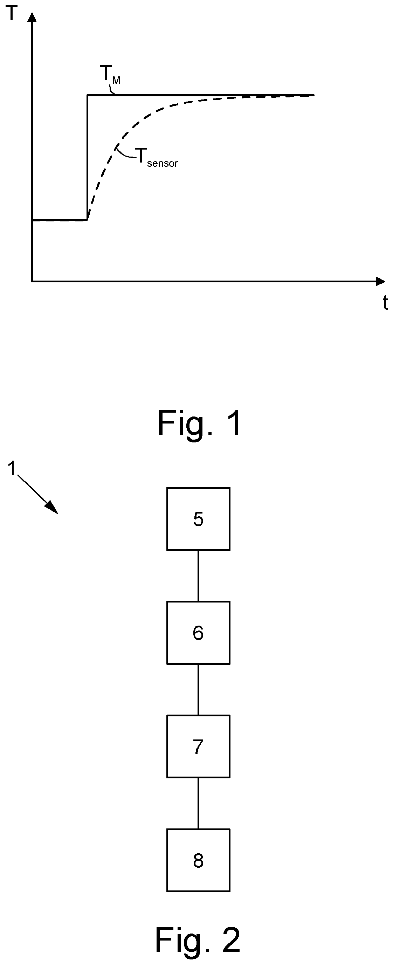

Fig. 1 zeigt das Verhalten eines Temperatursensors 12, in dem Fall, in dem das zu vermessende Medium sprunghaft seine Temperatur ändert. Der Darstellung ist zu entnehmen, dass nach einer anfänglichen Übereinstimmung der Temperatur der Temperatursensor 12 der sprunghaften Änderung der Mediumtemperatur $T_M$ nur verzögert folgen kann. Nach einem Zeitintervall stimmt die Sensortemperatur $T_{sensor}$ wieder mit der Mediumtemperatur $T_M$ überein.

In Fig. 2 ist ein erstes Verfahren 1 zur Kalibration einer Temperaturmesseinheit 3 dargestellt. Die Temperaturmesseinheit 3 weist eine Ultraschallmesseinrichtung 10 und einen Temperatursensor 12 auf. Die Ultraschallmesseinrichtung 10 umfasst einen Ultraschallsender und einen Ultraschallempfänger, wobei der Ultraschallempfänger derart angeordnet ist, dass er ein von dem Ultraschallsender ausgesendetes Messsignal 11 nach dem Durchlauf durch das Medium empfängt. Der Temperatursensor 12 ist derart angeordnet, dass er die Temperatur des Mediums misst.

In einem ersten Schritt 5 wird auf wenigstens zwei Messpunkten, wobei die wenigstens zwei Messpunkte eine unterschiedliche Mediumtemperatur $T_M$ aufweisen, zumindest die Schallgeschwindigkeit c eines Messsignals, die mittels eines Temperatursensors 12 gemessene Temperatur $T_{sensor}$ und die zeitliche Variation der Sensortemperatur dT/dt bestimmt.

In einem nächsten Schritt 6 wird aus der gemessenen Temperatur $T_{sensor}$ unter Berücksichtigung der zeitlichen Variation der Sensortemperatur dT/dt die Mediumtemperatur $T_M$ bestimmt, sodass wenigstens drei Wertepaare ($T_{M1}$, $c_1$), ($T_{M2}$, C2) und ($T_{M3}$, $c_3$) existieren. Gemäß diesem Ausführungsbeispiel wird auf jedem Messpunkt die Sensortemperatur $T_{sensor}$ unter der Bedingung, dass die zeitliche Variation der gemessenen Temperatur dT/dt unter einem festgelegten Grenzwert liegt, aufgenommen. In diesem Fall ist damit gewährleistet, dass die gemessene Sensortemperatur $T_{sensor}$ der Mediumtemperatur $T_M$ bestmöglich entspricht.

In einem nächsten Schritt 7 wird der empirische funktionale Zusammenhang $T_M(c)$ durch Bildung der Ausgleichskurve durch die Wertepaare bestimmt. Die Ausgleichskurve entspricht einem polynomialen Fit durch die Wertepaare.

Anschließend wird der empirische funktionale Zusammenhang $T_M(c)$ in der Temperaturmesseinheit 3 hinterlegt 8.

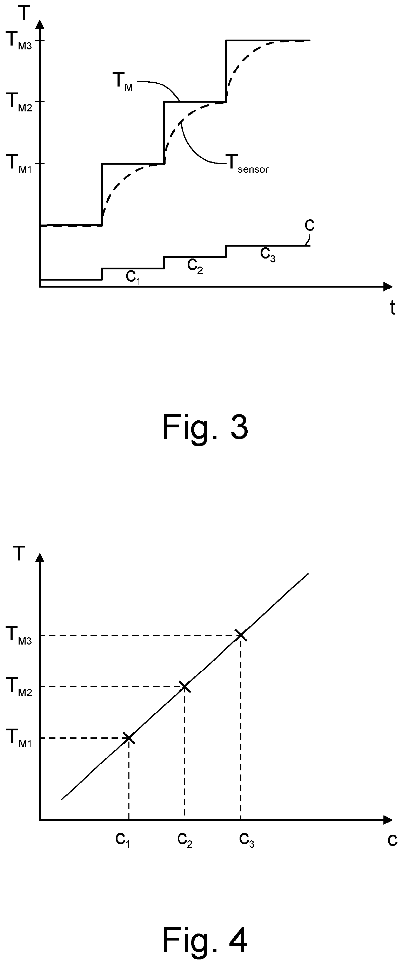

Fig. 3 zeigt den Verlauf der Änderung der Mediumtemperatur $T_M$, der Sensortemperatur $T_{sensor}$ sowie der Schallgeschwindigkeit c zur Aufnahme der einzelnen Wertepaare $(T_{M1}, c_1)$, $(T_{M2}, c_2)$ und $(T_{M3}, c_3)$ gemäß dem in Fig. 2 dargestellten Verfahren.

Fig. 4 zeigt die einzelnen Wertepaare $(T_{M1}, c_1)$, $(T_{M2}, c_2)$ und $(T_{M3}, c_3)$ zusammen mit der Ausgleichskurve, die den empirischen funktionalen Zusammenhang $T_M(c)$ zwischen der Mediumtemperatur $T_M$ und der Schallgeschwindigkeit c beschreibt.

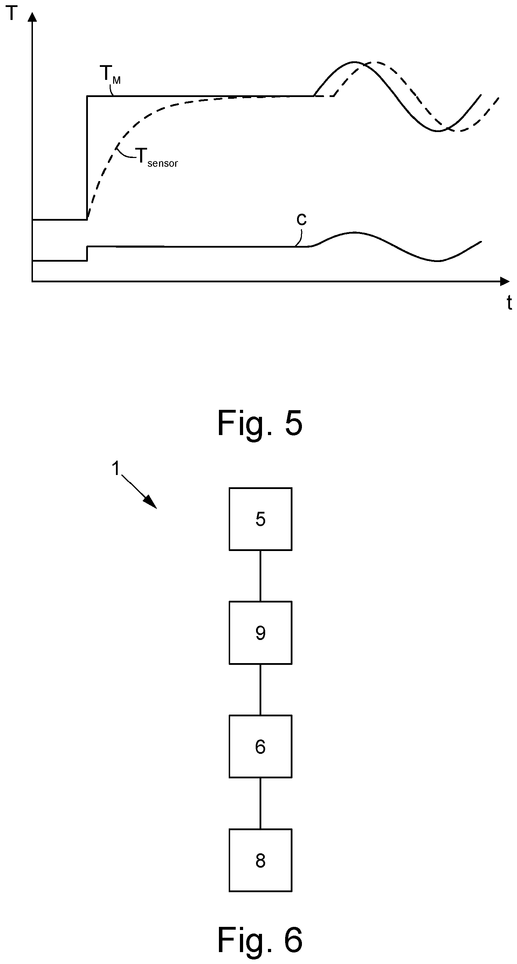

Fig. 5 zeigt den Verlauf der Änderung der Mediumtemperatur $T_M$, der Sensortemperatur $T_{sensor}$ sowie der Schallgeschwindigkeit c zur Aufnahme der einzelnen Wertepaare $(T_{M1}, c_1)$, $(T_{M2}, c_2)$ und $(T_{M3}, c_3)$, wobei im Unterschied zu dem in den Fig. 2 bis 4 dargestellten Ausführungsbeispiel auch die Sensortemperaturwerte $T_{sensor}$ berücksichtigt werden, die im Verlauf einer Temperaturänderung liegen. Hieraus ergibt sich der Vorteil, dass der zeitliche Aufwand zur Bestimmung der Wertepaare $(T_{M1}, c_1)$ bis $(T_{Mn}, c_n)$ minimiert werden kann.

In Fig. 6 ist ein weiteres Ausführungsbeispiel eines erfindungsgemäßen Verfahrens 1 zur Kalibration einer Temperaturmesseinheit 3 dargestellt. In einem ersten Schritt 5 wird auf wenigstens zwei Messpunkten, wobei die wenigstens zwei Messpunkte eine unterschiedliche Mediumtemperatur $T_M$ aufweisen, zumindest die Schallgeschwindigkeit c eines Messsignals, die mittels eines Temperatursensors 12 gemessene Temperatur $T_{sensor}$ und die zeitliche Variation der Sensortemperatur dT/dt bestimmt.

In einem nächsten Schritt 6 wird aus der gemessenen Temperatur $T_{sensor}$ unter Berücksichtigung der zeitlichen Variation der Sensortemperatur dT/dt die Mediumtemperatur $T_M$ bestimmt, In vorteilhafter Weise wird in dem dargestellten Ausführungsbeispiel ebenfalls der Übergang zwischen den wenigstens zwei Mediumtemperaturen $T_M$ zur Herstellung des gesuchten Zusammenhangs zwischen der Schallgeschwindigkeit c und der Mediumtemperatur $T_M$ berücksichtigt.

Hierzu wird zunächst mit Hilfe des Zusammenhangs $T_M = T_{sensor} + \tau * dT/dt$ die Zeitkonstante $\tau$ der Temperaturmesseinheit derart abgeschätzt 9, dass die so bestimmten Werte $T_M$ und c einen glatten, also eindeutigen funktionalen Zusammenhang ergeben.

Der so bestimmte Zusammenhang $T_M(c)$ wird anschließend in der Temperaturmesseinheit 3 hinterlegt 8. Mit Hilfe dieses Zusammenhangs kann im weiteren Betrieb die Mediumtemperatur durch Messung der Schallgeschwindigkeit c besonders genau und schnell bestimmt werden.

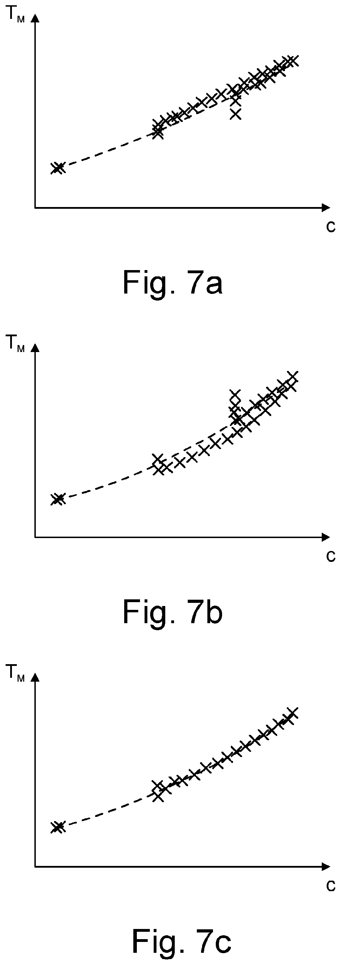

Die folgenden Fig. 7a bis 7c zeigen das Ergebnis unterschiedlicher Abschätzungen von der Zeitkonstanten $\tau$ zur bestmöglichen Herstellung eines Zusammenhangs zwischen der Mediumtemperatur $T_M$ und der Schallgeschwindigkeit c.

Die Fig. 7a und 7b zeigen den Zusammenhang zwischen $T_M$ und c, für den Fall, dass die Zeitkonstante $\tau$ nicht richtig geschätzt wurde. Ein glatter Zusammenhang zwischen $T_M$ und c ist nicht zu erkennen.

Fig. 7c zeigt einen glatten Zusammenhang zwischen der Mediumtemperatur $T_M$ und c. Über die Ausgleichskurve der dargestellten Werte lässt sich ein funktioneller Zusammenhang zwischen $T_M$ und c herstellen, sodass über die Messung der Schallgeschwindigkeit c die Bestimmung der Mediumtemperatur $T_M$ erfolgen kann.

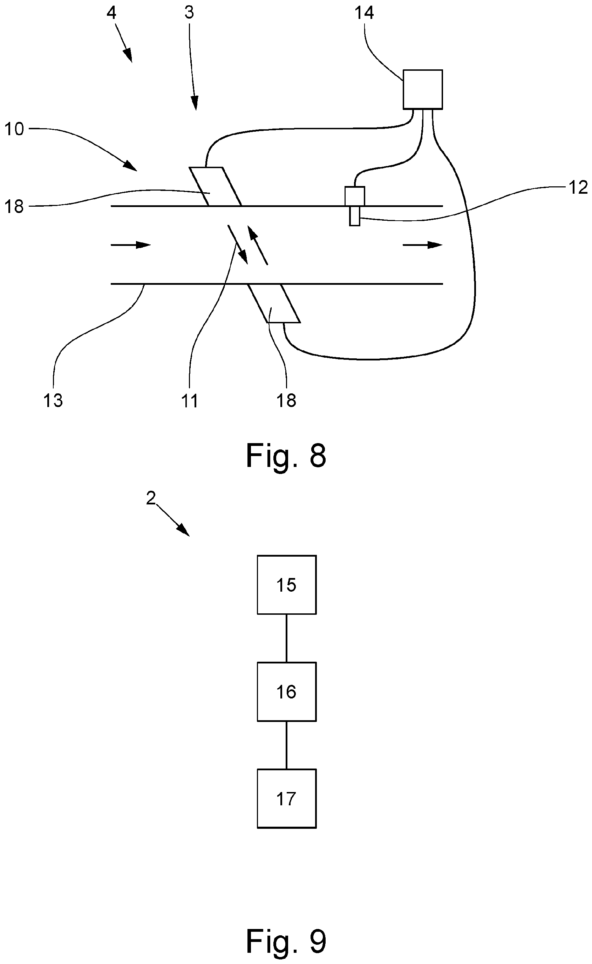

In Fig. 8 ist eine Temperaturmesseinheit 3 umfassend eine Ultraschallmesseinrichtung 10, mit zwei Ultraschallwandlern 18, die jeweils als Sender und Empfänger ausgebildet sind, zur Aussendung und für den Empfang eines Messsignals 11 dargestellt. Zudem ist ein Temperatursensor 12 vorhanden, der die Temperatur des in dem Messrohr 13 befindlichen Mediums bestimmt. Weiterhin ist eine Steuer- und Auswerteeinheit 14 vorhanden, die aus der gemessenen Schallgeschwindigkeit eines Messsignals 11 die Temperatur des Mediums bestimmt.

Zudem ist die Temperaturmesseinheit 3 derart ausgebildet, dass sie nicht nur die Mediumtemperatur $T_M$ über die aktuelle Schallgeschwindigkeit c bestimmen kann. Vielmehr kann die Temperaturmesseinheit 3 im laufenden Betrieb durch Kommunikation mit dem Temperatursensor 12 überwachen, ob die über die Schallgeschwindigkeit bestimmten Temperaturwerte korrekt sind, oder ob eine Anpassung der Schätzung von $\tau$ und damit eine Neukalibrierung erforderlich ist. Insofern ist die Temperaturmesseinheit 3 ebenso dazu geeignet, Änderungen der Prozessbedingungen, wie beispielsweise einen Medienwechsel zu erfassen.

Die dargestellte Ultraschallmesseinrichtung 10 ist ebenso derart angeordnet und ausgebildet, dass durch Messung des Laufzeitunterschiedes des Messsignals 11 in und entgegen der Strömungsrichtung des strömenden Mediums die Strömungsgeschwindigkeit des Mediums bestimmt werden kann. Insofern ist in Fig. 8 ebenso ein Ultraschalldurchflussmessgerät 4 dargestellt, das in vorteilhafter Weise gleichzeitig die Mediumtemperatur $T_M$ besonders schnell bestimmen kann.

In Fig. 9 ist ein Verfahren 2 zur Messung der Temperatur eines strömenden Mediums mittels einer Temperaturmesseinheit 3, die mit einem Verfahren 1 gemäß dem in Fig. 2 oder 6 dargestellten Ausführungsbeispiel kalibriert ist, dargestellt.

In einem ersten Schritt 15 wird ein Messsignal 11 in das Medium ausgesendet. Aus der Laufzeit des Messsignals wird in einem nächsten Schritt die Schallgeschwindigkeit c bestimmt 16. Aus der Schallgeschwindigkeit c wird gemäß dem hinterlegten Zusammenhang $T_M(c)$ die Mediumtemperatur $T_M$ bestimmt 17.

Das dargestellte Verfahren zur Messung der Temperatur eines Mediums weist den Vorteil auf, dass es eine besonders genaue und schnelle Temperaturmessung ermöglicht.

**Bezugszeichen**

1 Verfahren zur Kalibrierung einer Temperaturmesseinheit
2 Verfahren zur Messung der Temperatur
3 Temperaturmesseinheit
4 Ultraschalldurchflussmessgerät
5 Erfassung der Schallgeschwindigkeit c eines Messsignals, der mittels eines Temperatursensors gemessenen Temperatur $T_{sensor}$ und der zeitlichen Variation der Sensortemperatur dT/dt
6 Bestimmung der Mediumtemperatur $T_M$
7 Bestimmung des funktionalen Zusammenhangs $T_M(c)$
8 Hinterlegung des funktionalen Zusammenhangs in der Temperaturmesseinheit
9 Abschätzung der Zeitkonstanten $\tau$
10 Ultraschallmesseinrichtung
11 Messsignal
12 Temperatursensor
13 Messrohr
14 Steuer- und Auswerteeinheit
15 Aussendung eines Messsignals
16 Bestimmung der Schallgeschwindigkeit
17 Bestimmung der Mediumtemperatur aus der Schallgeschwindigkeit
18 Ultraschallwandler

**Patentansprüche**

1. Verfahren (1) zur Kalibration einer auf Ultraschallmessung basierenden Temperaturmesseinheit (3), wobei die Temperaturmesseinheit (3) eine Ultraschallmesseinrichtung (10) mit wenigstens einem Ultraschallsender und wenigstens einem Ultraschallempfänger aufweist, wobei ein Temperatursensor (12) vorhanden ist,
**dadurch gekennzeichnet,**

   **dass** das Verfahren (1) die folgenden Schritte aufweist:

      - Herstellung eines empirischen funktionalen Zusammenhangs $T_M(c)$ zwischen der Mediumtemperatur $T_M$ eines zu vermessenden Mediums und der Schallgeschwindigkeit c eines Messsignals, das das zu vermessende Medium durchläuft,

   wobei auf wenigstens zwei Messpunkten zumindest die Schallgeschwindigkeit c eines Messsignals, die mittels eines Temperatursensors gemessene Temperatur $T_{sensor}$ und die zeitliche Variation der Sensortemperatur dT/dt bestimmt werden (5), wobei die wenigstens zwei Messpunkte eine unterschiedliche Mediumtemperatur $T_M$ aufweisen,
   wobei aus der gemessenen Temperatur $T_{sensor}$ unter Berücksichtigung der zeitlichen Variation der Sensortemperatur dT/dt die Mediumtemperatur $T_M$ bestimmt wird (6), sodass wenigstens zwei Wertepaare $(T_{M1}, c_1)$ und $(T_{M2}, c_2)$ existieren,
   und wobei eine Ausgleichskurve durch die Wertepaare gelegt wird (7), die dem empirischen funktionalen Zusammenhang $T_M(c)$ entspricht,

      - Hinterlegung (8) des funktionalen Zusammenhangs $T_M(c)$ in der Temperaturmesseinheit (3).

2. Verfahren (1) nach Anspruch 1, **dadurch gekennzeichnet, dass** an wenigstens zwei Messpunkten die zeitliche Variation der Sensortemperatur dT/dt und/oder die zeitliche Variation der gemessenen Schallgeschwindigkeit dc/dt unter einem festgelegten Grenzwert liegt.

3. Verfahren (1) nach einem der Ansprüche 1 oder 2, **dadurch gekennzeichnet, dass** bei der Bestimmung der Mediumtemperatur $T_M$ aus der Sensortemperatur $T_{sensor}$ zusätzlich eine die Trägheit des Temperatursensors (12) beschreibende Zeitkonstante $\tau$ berücksichtigt wird.

4. Verfahren (1) nach Anspruch 3, **dadurch gekennzeichnet, dass** der zur Bestimmung der Mediumtemperatur $T_M$ aus der gemessenen Sensortemperatur $T_{sensor}$ die Zeitkonstante $\tau$ derart abgeschätzt wird, dass die wenigstens zwei Wertepaare $(T_{M1}, c_1)$ und $(T_{M2}, c_2)$ eine funktionale Beziehung aufweisen.

5. Verfahren (1) nach Anspruch 4, **dadurch gekennzeichnet, dass** die Mediumtemperatur $T_M$ aus der gemessenen Sensortemperatur $T_{sensor}$ mittels des Zusammenhangs $T_M = T_{sensor} + \tau * dT/dt$ bestimmt wird, wobei die Zeitkonstante $\tau$ derart abgeschätzt wird, dass die wenigstens zwei Wertepaare $(T_{M1}, c_1)$ und $(T_{M2}, c_2)$ eine funktionale Beziehung aufweisen.

6. Verfahren (1) nach einem der Ansprüche 1 bis 5, **dadurch gekennzeichnet, dass** an jedem Messpunkt zusätzlich der Druck des Mediums gemessen wird und dass ein funktionaler Zusammenhang $T_M(c,$

p) zwischen der Mediumtemperatur $T_M$, der Schallgeschwindigkeit c und dem Druck des Mediums p hergestellt wird.

7.  Verfahren (2) zur Messung der Temperatur eines, vorzugsweise strömenden, Mediums mit einer Temperaturmesseinheit (3), wobei die Temperaturmesseinheit (3) eine Ultraschallmesseinrichtung (10) mit wenigstens einem Ultraschallsender und wenigstens einem Ultraschallempfänger aufweist, **dadurch gekennzeichnet,** **dass** die Temperaturmesseinheit (3) mit einem Verfahren (1) nach einem der Ansprüche 1 bis 6 kalibriert ist, dass die Schallgeschwindigkeit c eines das zu vermessende Medium durchlaufenden Messsignals gemessen wird und dass aus dem hinterlegten Zusammenhang $T_M(c)$ die Temperatur des Mediums bestimmt wird.

8.  Verfahren (2) nach Anspruch 7, **dadurch gekennzeichnet, dass** die Temperaturmesseinheit (3) einen Temperatursensor (12) aufweist und dass im Betrieb die Temperatur des Mediums zumindest zeitweise sowohl über die Schallgeschwindigkeit c als auch über den Temperatursensor (12) bestimmt wird, wobei insbesondere in dem Fall, in dem zeitliche Variation der Temperatur dT/dt unter einem festgelegten Grenzwert liegt, die über die Schallgeschwindigkeit c bestimmte Temperatur $T_M$ mit der Sensortemperatur $T_{sensor}$ verglichen wird.

9.  Verfahren (2) nach Anspruch 8, **dadurch gekennzeichnet, dass** sofern die über die Schallgeschwindigkeit c bestimmte Temperatur $T_M$ in dem Fall, in dem dT/dt unter einem bestimmten Grenzwert liegt, von der Sensortemperatur $T_{sensor}$ abweicht, die Temperaturmesseinheit (3) automatisch gemäß einem der Verfahren (1) der Ansprüche 1 bis 6 neu kalibriert wird und/oder dass eine Meldung hinsichtlich der gemessenen Abweichung ausgegeben wird.

10. Temperaturmesseinheit (3) zur Messung der Temperatur eines Mediums mit wenigstens einer Ultraschallmesseinrichtung (10), wobei die Ultraschallmesseinrichtung (10) wenigstens einen Ultraschallsender und wenigstens einen Ultraschallempfänger aufweist, und mit einer Steuer- und Auswerteeinheit (14), **dadurch gekennzeichnet,**

    **dass** in der Steuer- und Auswerteeinheit (14) ein gemäß einem Verfahren (1) nach einem der Ansprüche 1 bis 6 hergestellter Zusammenhang $T_M(c)$ zwischen der Mediumtemperatur $T_M$ des zu vermessenden Mediums und der Schallgeschwindigkeit c eines Messsignals hinterlegt ist, und **dass** die Temperaturmesseinheit (3) im Betrieb aus der Messung der Schallgeschwindigkeit c eines Messsignals die aktuelle Temperatur des Mediums $T_M$ gemäß einem Verfahren (2) nach einem der Ansprüche 7 bis 9 bestimmt.

11. Ultraschalldurchflussmessgerät (4) mit einem Messrohr (13) und mit einer Ultraschallmesseinrichtung (10), wobei die Ultraschallmesseinrichtung wenigstens einen Ultraschallsender und wenigstens einen Ultraschallempfänger aufweist, mit wenigstens einer Temperaturmesseinheit (3), wobei die Temperaturmesseinheit (3) gemäß Anspruch 10 ausgebildet ist, sodass das Ultraschalldurchflussmessgerät (4) im Betrieb einerseits aus der Laufzeit eines ersten Messsignals (11), das das Medium sowohl in Strömungsrichtung als auch entgegen der Strömungsrichtung durchläuft, die Strömungsgeschwindigkeit des Mediums bestimmt und andererseits durch die Messung der Schallgeschwindigkeit c des ersten Messsignals oder eines zweiten Messsignals die Temperatur des Mediums bestimmt.

12. Ultraschalldurchflussmessgerät (4) gemäß Anspruch 11, **dadurch gekennzeichnet, dass** der wenigstens eine Ultraschallsender und der wenigstens eine Ultraschallempfänger der Temperaturmesseinrichtung (3) identisch mit dem wenigstens einen Ultraschallsender und dem wenigstens einen Ultraschallempfänger des Ultraschalldurchflussmessgeräts (4) zur Bestimmung des Durchflusses des strömenden Mediums ist.

13. Ultraschalldurchflussmessgerät (4) gemäß Anspruch 11, **dadurch gekennzeichnet, dass** das Ultraschalldurchflussmessgerät (4) neben der Temperaturmesseinheit (3) wenigstens einen weiteren Ultraschallsender und wenigstens einen weiteren Ultraschallempfänger aufweist, die die Ultraschallmesseinrichung (10) zur Messung des Durchflusses eines durch das Messrohr strömenden Mediums bilden.

14. Ultraschalldurchflussmessgerät (4) nach einem der Ansprüche 11 bis 13, **dadurch gekennzeichnet, dass** die Temperaturmesseinheit (3) derart an dem Messrohr (13) angeordnet ist, dass der Ultraschallsender und der Ultraschallempfänger im Wesentlichen plan zu der Messrohrinnenwand angeordnet sind.

Fig. 1

Fig. 2

Fig. 3

Fig. 4

Fig. 5

Fig. 6

$T_M$

C

## Fig. 7a

$T_M$

C

## Fig. 7b

$T_M$

C

## Fig. 7c

Fig. 8

Fig. 9

# EP 4 033 214 A1

Europäisches Patentamt
European Patent Office
Office européen des brevets

## EUROPÄISCHER RECHERCHENBERICHT

**Nummer der Anmeldung**

EP 21 20 4464

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2010 014038 A1 (KROHNE AG [CH]) 6. Oktober 2011 (2011-10-06) * Zusammenfassung; Abbildungen 2-4 * * Absätze [0009] – [0014], [0020] – [0024], [0037], [0039], [0040] * ----- | 1-14 | INV. G01K11/24 G01F1/667 G01K15/00 |
| A | INSEOK YANG ET AL: "First-order compensation for time lag in the dynamic calibration of industrial thermometers; First-order compensation for time lag in the dynamic calibration of thermometers", MEASUREMENT SCIENCE AND TECHNOLOGY, IOP, BRISTOL, GB, Bd. 20, Nr. 1, 1. Januar 2009 (2009-01-01) , Seite 15109, XP020152537, ISSN: 0957-0233 * Zusammenfassung * * Absätze [0001], [0002] * ----- | 1,3-5 | |
| A | DE 10 2010 035859 A1 (AVL LIST GMBH [AT]) 31. März 2011 (2011-03-31) * Zusammenfassung; Abbildung 1 * * Absätze [0006], [0018] – [0023] * ----- | 1,7-9 | **RECHERCHIERTE SACHGEBIETE (IPC)** G01K G01F |

Der vorliegende Recherchenbericht wurde für alle Patentansprüche erstellt

| Recherchenort | Abschlußdatum der Recherche | Prüfer |
|---|---|---|
| Den Haag | 29. März 2022 | de Bakker, Michiel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

14

**ANHANG ZUM EUROPÄISCHEN RECHERCHENBERICHT
ÜBER DIE EUROPÄISCHE PATENTANMELDUNG NR.**

EP 21 20 4464

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-03-2022

| Im Recherchenbericht angeführtes Patentdokument | Datum der Veröffentlichung | Mitglied(er) der Patentfamilie | | Datum der Veröffentlichung |
|---|---|---|---|---|
| DE 102010014038 A1 | 06-10-2011 | CN | 102213608 A | 12-10-2011 |
| | | DE | 102010014038 A1 | 06-10-2011 |
| | | DK | 2378255 T3 | 02-01-2018 |
| | | EP | 2378255 A1 | 19-10-2011 |
| | | JP | 5559091 B2 | 23-07-2014 |
| | | JP | 2011221021 A | 04-11-2011 |
| | | US | 2011239730 A1 | 06-10-2011 |
| DE 102010035859 A1 | 31-03-2011 | AT | 10959 U2 | 15-01-2010 |
| | | DE | 102010035859 A1 | 31-03-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014039873 A1